# EUROPEAN PATENT APPLICATION

(11) **EP 1 811 783 A1**
(43) Date of publication of application: **25.07.2007**
(21) Application number: 06300045.9
(22) Date of filing: 19.01.2006
(51) Int. Cl.: H04N 7/24

(54) **Preview service management for digital video broadcast in wireless communication devices**

(71) Applicant: MOTOROLA, INC., Schaumburg, IL 60196 (US)
(72) Inventor: ALBORNA, Karine, 31100, TOULOUSE (FR); ABDESSELEM, Ouelid, 31100, TOULOUSE (FR); MARTINIE, Celia, 31100, TOULOUSE (FR); PLACIARD, Edwin, 31100, TOULOUSE (FR)
(74) Representative: Delumeau, François Guy

(57) **Abstract**

A digital video broadcast enabled wireless communication device (500) including a map table stored in memory communicably coupled to a processor, the map table including program and corresponding packet identifier information, and the map table including program identifying information and corresponding program address information

## Description

### FIELD OF THE DISCLOSURE

The present disclosure relates generally to wireless communications, and more particularly to digital video broadcast for wireless communication devices, for example, cellular telephone handsets, corresponding devices and methods.

### BACKGROUND

The Digital Video Broadcast Handheld system (DVB-H) is a low-power derivative of the DVB Terrestrial transmission standard (DVB-T) standard that was developed to bring broadcast services available on a transport stream to wireless communication devices. In DVB-H, power consumption is reduced by implementing time-slicing, wherein the wireless communication device is active only 10-20% of the time. The implementation of time-slicing in DVB-H applications may result in some delay when switching between programs.

The DVB Program Preview feature improves the user-experience by providing a quick overview of streamed services available. Reducing the power consumption in applications implementing the DVB-H specification has an adverse affect on the discovery of programs.

In the DVB-H specification, the network sends several DVB-H signaling tables to DVB-H enabled wireless communication devices. The Program Association Table (PAT) and the Program Map Table (PMT) in DVB-H are based on the MPEG2 specification. The PAT and PMT are transmitted by the network every 100 ms. The PAT lists all programs available on the current transport stream and the corresponding Program Mapping Table (PMT) Packet Identifier (PID). The PAT is generally updated each time a program is modified.

An IP/MAC Notification Table (INT) has been introduced in DVB-H standard to identify the IP addresses of the available services. The INT must be received and parsed before the device can obtain services. The IP Datacast over DVB-H PSI/SI specification however requires that all sections of the INT be transmitted at least once every 30 seconds. This means that the mobile device may be required to wait as long as 30 seconds to display a service.

The various aspects, features and advantages of the disclosure will become more fully apparent to those having ordinary skill in the art upon careful consideration of the following Detailed Description thereof with the accompanying drawings described below. The drawings may have been simplified for clarity and are not necessarily drawn to scale.

### BRIEF DESCRIPTION OF THE DRAWINGS

FIG. 1 is a wireless digital video broadcast network.

FIG. 2 illustrates time sliced bursts including a program association table broadcast.

FIG. 3 illustrates the interval between successive of INT tables.

FIG. 4 is an exemplary modified zapping map table (ZMT).

FIG. 5 is an illustrative DVB enable wireless device architecture.

### DETAILED DESCRIPTION

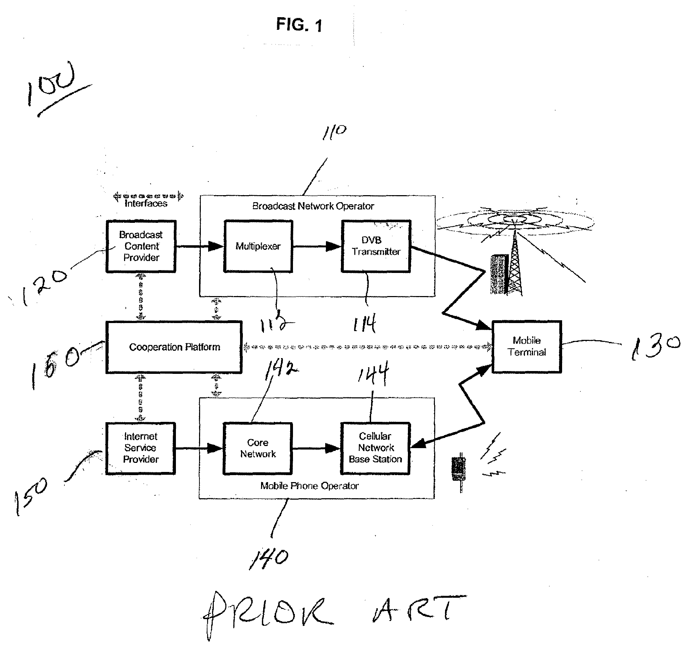

In FIG. 1, an illustrative wireless communication system 100 generally comprises a broadcast network 110 that broadcasts content provided by a content provider 120 to one or more wireless mobile terminals, for example, terminal 130. In one embodiment, the broadcast network is a unidirectional broadcast network, though more generally content may be communicated over a bi-directional network. The exemplary content broadcast network 110 includes a multiplexer 112 for multiplexing content received from the content server. The exemplary content broadcast network 110 also includes a transmitter 114 that is typically embodied as at least one primary transmitter and one or more synchronized repeaters situated on or near the edge of the primary transmitter's range. In some applications where content is transmitted to wireless devices, the transmitter transmits pursuant to the DVB-H protocol. These and other aspects of the broadcast network entity are discussed further below.

In FIG. 1, the illustrative system 100 includes a cellular communication network 140. The exemplary cellular communication network includes a core network 142 and a radio access network 144, which generally includes a base station controller and base transceiver stations. The cellular communication network is communicably coupled to an Internet Service Provider gateway. These and other aspects of cellular communication networks are known generally by those having ordinary skill in the art as discussed further below. Exemplary cellular communication networks include 3GPP and 3GPP2 based networks and future evolving wireless communication networks.

In FIG. 1, a cooperation platform 160 communicably interconnects the broadcast network 110 and the communication network 140. The cooperation platform enables the sharing and re-direction of content and/or data between the broadcast and communication networks. Thus generally content may be broadcast to a wireless communication device over a broadcast network or over a communication network.

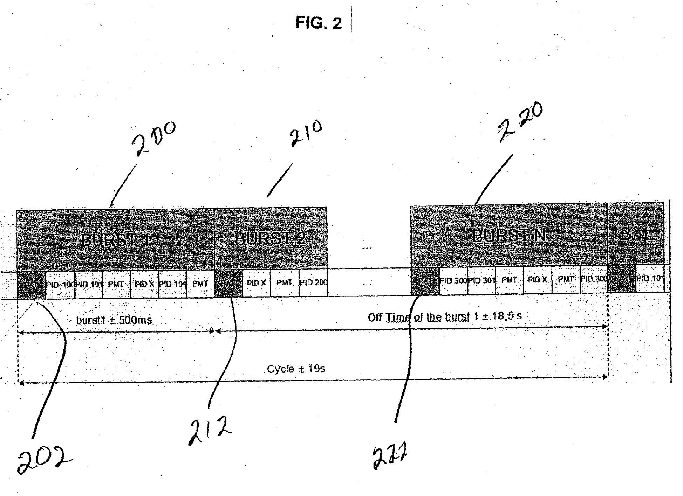

In FIG. 2, bursts 200, 210 ... are transmitted periodically pursuant to the DVB-H protocol. The bursts of FIG. 2 are illustrated adjacent one another, though in reality the bursts are separated or spaced apart in time by an OFF interval dependent on the burst duty cycle. The PAT is transmitted at some interval, for example, at least once every 100 ms pursuant to the DVB-H protocol. In some applications, for example, in DVB-H, the PAT is included in every burst. In FIG. 2, each burst includes a program association table (PAT), for example, PAT 202 in burst 200 and PAT 212 in burst 210. The PAT may also be divided into sections and sent more than once in a burst.

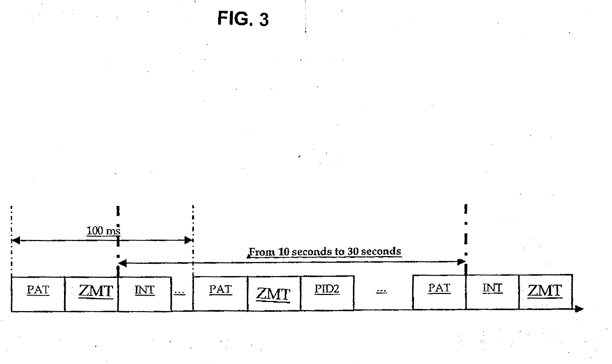

The PAT lists all programs available on the current transport stream and the corresponding Program Mapping Table (PMT) Packet Identifier (PID). The IP/MAC Notification Table (INT) is another table different from the PAT. The INT must be parsed in order to switch IP addresses associated with different services. The user is generally required to wait during the off-time between INT Tables until the next INT table is received and parsed before accessing programming identified in a previously sent PAT. Thus in instances where the DVB-H device re-boots or changes services, the user could wait as long as 30 seconds before the new service is displayed, since the intervals between successive INT transmissions may be as long as 30 seconds. FIG. 3 illustrates the interval between successive INT tables. Conventionally, a black screen or a waiting window has been displayed during these intervals.

According to one aspect of the disclosure, a channel with program preview information is provided during the service latency period between two successive INT tables. In one embodiment, the program preview information is provided in a map table including program identifying information and corresponding program address information. In one embodiment, the map table is a Zapping Map Table (ZMT). Exemplary program address information includes program Internet Protocol (IP) address information corresponding to each program for which program identifying information is provided. In one DVB-H implementation, the map table, for example, a zapping map table, is transmitted in bursts. The Map table may also be separated into multiple portions within each burst.

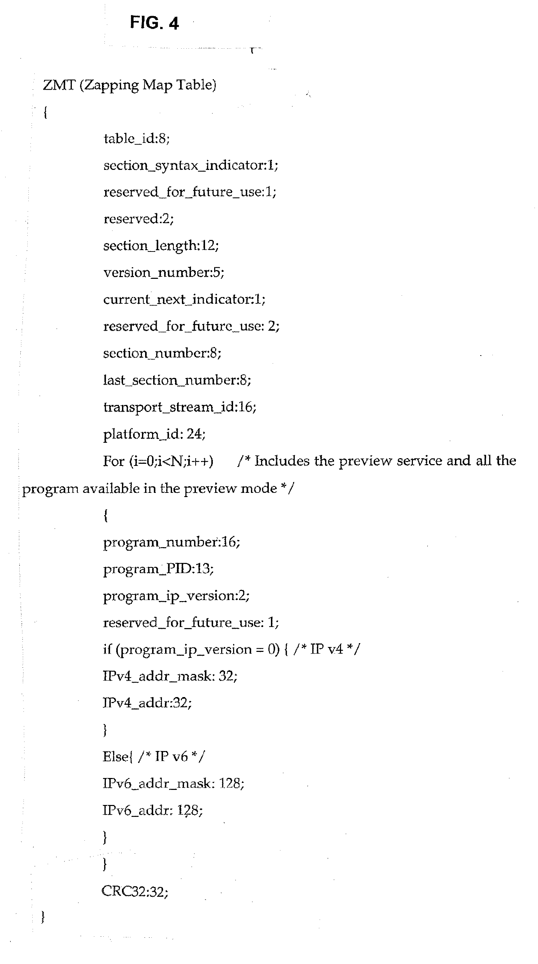

FIG. 4 illustrates an exemplary map table in the form of a Zapping Map Table (ZMT). In the illustrative ZMT of FIG. 4, the "Program_number" field provide program identifying information, the "Program_PID" and "IP_addr" (v4 or v6, with or without IP_addr_mask) provide the program address information. The program preview information can be contained at the above "address" of the program. Some optional fields can also be added in the ZMT for program preview information.

The illustrative ZMT includes a "table_id" that uniquely defines the ZMT, a "section_syntax_indicator", which is a 1-bit field usually set to "1". A 12-bit "section_length" field that specifies the number of bytes of the section, starting immediately following the "section_length" field and including the CRC. The "section_length" shall not exceed 4 093 so that the entire section has a maximum length of 4 096. The "version_number" is a 5-bit field that provides the version number of the sub-table. The version_number is incremented by 1 when a change in the information carried within the sub_table occurs. When the count reaches value 31, it wraps around to 0. When the "curren_next_indicator" is set to "1", then the "version_number" is that of the currently applicable "sub_table" defined by the "table_id", "platform_id" and "action_type". When the current_next_indicator is set to "0", then the "version_number" is that of the next applicable "sub_table" defined by the "table_id", "platform_id" and "action_type". The "current_next_indicator" is a 1-bit indicator, which when set to "1" indicates that the sub_table is the currently applicable sub_table. When the "current_next indicator" bit is set to "0", it indicates that the "sub_table" sent is not yet applicable and shall be the next "sub_table" to be valid. The "section_number" is an 8-bit field that provides the section number. The "section_number" of the first section in the "sub_table" is "0x00". The "section_number" is incremented by 1 with each additional section with the same "table_id", "platform_id" and "action_type". The "last_section_number" is an 8-bit field that indicates the number of the last section, that is, the section with the highest "section_number", of the sub_table of which this section is part. The "Transport_stream_id" is a 16 bit field that identifies the Transport Stream from any other multiplex within the network. The "platform_id" is a 24 bit field that identifies a given IP/MAC platform. The "platform_id" is a 24 bit field that serves as a label to identify a given IP/MAC platform. The "Program_number" specifies the program to which the "program_map_PID" is applicable. The "program_PID" specifies the PID of the Elementary Stream packet in which a service is transported. The "IPv4_addr_mask" is a 32-bit field that specifies the IPpv4 mask. The "IPpv4_addr" is a 32-bit field that specifies an IPpv4 unicast/multicast/broadcast address. The IPpv4 address is fragmented into 4 fields of 8 bits where the first byte contains the most significant byte of the IPpv4 address (dotted decimal notation). The "IPv6_addr _mask" is a 128-bit field that specifies the IPpv6 mask. The "IPv6_addr" is a 128 bit field that specifies an IPpv6 address. The IPpv6 address is fragmented into 16 fields of 8 bits where the first byte contains the most significant byte of the IPpv6 address. The "CRC_32" is a 32-bit field that contains the CRC value that gives a zero output of the registers in the decoder defined in EN 300 468 after processing the entire private section.

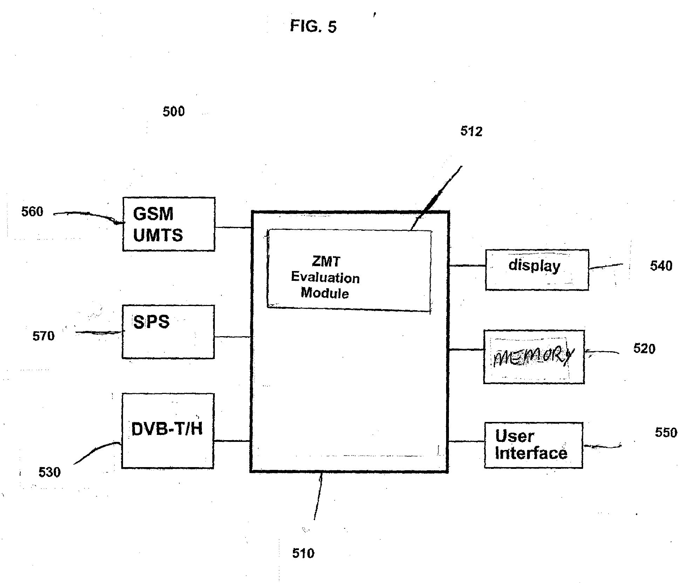

FIG. 5 illustrates a schematic block diagram of a wireless communication device 500. The illustrative device generally comprises a processor 510 communicably coupled to memory 520, including RAM, ROM, cache and other memory device external or internal to the processor. The processor 510 is also communicably coupled to a receiver 530 capable of complying with the DVB-H and/or DVB-T protocols. The processor is also communicably coupled to a display device and a user interface. The user interface may include a keypad, a microphone, and an audio output among other inputs and outputs.

The device 500 also includes a two-way radio transceiver 560, for example, a 3GPP Universal Mobile Telecommunications System (UMTS) or a 3GPP2 or some other radio transceiver, though it need not necessarily be a cellular radio. The device may also include other transmitter and/or receivers, for example, Bluetooth, WLAN, infrared devices either alone or in combination with a cellular transceiver. The exemplary device 500 also includes a satellite positioning system (SPS) receiver 570, for example, a NAVSTAR GPS receiver or a Galileo receiver or a GLONASS receiver. In other embodiments, however, the device does not include a transceiver other than the DVB receiver.

In one embodiment, a DVB mapping table, for example, a Zapping Map Table (ZMT), is transmitted by the network to the wireless communication device. In one embodiment, the zapping map table includes program identifying information and corresponding program address information. The ZMT may also include program and corresponding program mapping table packet identifier information. FIG. 3 illustrates the ZMT as part of the transmission sequence from the network. Generally, the network transmits the ZMT on some periodic schedule determined by the network, for example, every 100 ms or every 500 ms. These periods however are illustrative and not limiting as the frequency may be more or less, though generally the frequency is less than that of the INT, which was discussed above.

The Zapping Map Table (ZMT) may be received by the DVB or radio receiver in the wireless communication device. In FIG. 5, the digital video broadcast enabled wireless communication device processor 510 stores the zapping map table (ZMT) in memory 520. A zapping evaluation module 512 evaluates the program preview information including program identifying information and corresponding program address information in the ZMT. The program preview information including corresponding program IP address information obtained from the ZMT is more readily available than the same information obtained from other tables sent less frequently, for example, the INT, since the INT is transmitted less frequently than the ZMT.

While the present disclosure and the best modes thereof have been described in a manner establishing possession by the inventors and enabling those of ordinary skill in the art to make and use the same, it will be understood and appreciated that there are equivalents to the exemplary embodiments disclosed herein and that modifications and variations may be made thereto without departing from the scope and spirit of the inventions, which are to be limited not by the exemplary embodiments but by the appended claims.

## Claims

1. A method in a wireless communication device, the method comprising:
receiving a digital video broadcast map table,
the map table including program and corresponding packet identifier information;
providing, in the map table, program preview information, the program preview information including
program identifying information and corresponding program address information.

2. The method of Claim 1,
receiving the digital video broadcast map table includes receiving a zapping map table including program and corresponding packet identifier information,
providing, in the zapping map table, program preview information, the program preview information including
program identifying information and corresponding program address information.

3. The method of Claim 2,
providing program identifying information and corresponding program address information in the zapping map table includes providing program IP address information corresponding to each program for which program identifying information is provided.

4. The method of Claim 1,
providing program identifying information and corresponding program address information in the map table includes providing program IP address information corresponding to each program for which program identifying information is provided.

5. The method of Claim 1, receiving the map table in a burst including program map tables and program identifier information.

6. The method of Claim 5, receiving the map table separated into portions within the burst.

7. A digital video broadcast enabled wireless communication device, comprising:
a wireless receiver;
a processor communicably coupled to the wireless receiver;
a map table stored in memory communicably coupled to the processor,
the map table including program and corresponding packet identifier information, the map table including program identifying information and corresponding program address information.

8. The device of Claim 7,
the map table including program map packet identifier information for each program for which program identifying information is provided.

9. The device of Claim 7,
the map table is a zapping map table including the program and corresponding packet identifier information,
the zapping map table including program preview information, the program preview information including program identifying information and corresponding program address information.

10. The device of Claim 7, the receiver for receiving a digital video broadcast zapping map table.

11. A method in a DVB broadcast entity, the method comprising:
transmitting a DVB information in bursts,
a burst including a digital video broadcast zapping map table,
the zapping map table including program identifying information and corresponding program address information.

12. The method of Claim 11,
transmitting the DVB information in bursts includes transmitting a program association table in the same burst as the zapping map table.

13. The method of Claim 11,
periodically transmitting the zapping map table,
transmitting the DVB information in bursts includes periodically transmitting another table including the same program identifying information and corresponding program address information as the zapping map table,
the transmission period of the zapping map table greater than the transmission period of the other table.

14. A method in a wireless communication device, the method comprising:
receiving a digital video broadcast zapping map table,
the zapping map table including program identifying information and corresponding program address information.

15. The method of Claim 14,
providing program preview information includes providing program IP address information corresponding to each program for which program identifying information is provided.

16. The method of Claim 14,
receiving another table including the same program identifying information and corresponding program address information as the zapping map table, the zapping map table received more frequently than the other table.

17. The method of Claim 14,
receiving an IP/MAC notification table,
receiving the digital video broadcast zapping map table at a higher frequency than which the IP/MAC notification table is received.
